Europäisches Patentamt

European Patent Office

Office européen des brevets

(11) Publication number: **0 059 034**
**B1**

(12) EUROPEAN PATENT SPECIFICATION

(45) Date of publication of patent specification: **22.06.88**

(21) Application number: **82300574.9**

(22) Date of filing: **04.02.82**

(51) Int. Cl.⁴: **C 08 F 210/16,** C 08 F 4/68,
C 08 F 255/02

(54) A process for producing copolymers of ethylene with alpha-olefins.

(30) Priority: **04.02.81 JP 16102/81**

(43) Date of publication of application:
**01.09.82 Bulletin 82/35**

(45) Publication of the grant of the patent:
**22.06.88 Bulletin 88/25**

(84) Designated Contracting States:
**DE FR GB IT NL**

(56) References cited:
**FR-A-2 111 507**
**FR-A-2 190 838**
**FR-A-2 213 797**
**FR-A-2 273 824**
**US-A-3 954 909**

The file contains technical information
submitted after the application was filed and
not included in this specification

(73) Proprietor: **SUMITOMO CHEMICAL COMPANY,
LIMITED**
**15 Kitahama 5-chome Higashi-ku**
**Osaka-shi Osaka 541 (JP)**

(72) Inventor: **Harada, Hiroyuki**
**135, Iriyamazu**
**Ichihara-shi (JP)**
Inventor: **Takao, Hiroyoshi**
**7-16, Kurosunadai-3-chome**
**Chiba shi (JP)**
Inventor: **Yamamoto, Keisaku**
**3-14, Aobadai-5-chome**
**Ichihara-shi (JP)**

(74) Representative: **Tubby, David George et al**
**MARKS & CLERK 57-60 Lincoln's Inn Fields**
**London WC2A 3LS (GB)**

**Description**

The present invention relates to a process for copolymerizing ethylene with one or more α-olefins or for copolymerizing ethylene, one or more α-olefins and one or more polyenes. The term "copolymerization", as used herein, means, except where the context otherwise requires, polymerization of three or more monomers, as well as the simple polymerization of two different monomers. The process of the invention produces α-olefin copolymers having excellent processability and physical properties.

Although many types of catalyst have been proposed for producing amorphous copolymers of olefins, the so-called Ziegler catalysts are particularly effective. It is generally known that good results can be achieved using a Ziegler-type catalyst comprising an organoaluminium compound and a vanadium compound, particularly a trivalent to pentavalent vanadium compound soluble in an inert organic solvent. However, most of the vanadium-containing catalyst systems of this type, although exhibiting a very high activity in initial stages of the polymerization, exhibit a rapid drop in activity after a relatively short period of time and also have a low catalyst efficiency.

In order to improve this low catalyst efficiency, many catalysts activators have been proposed. The most effective of these activators are generally considered to be the alkyl esters of trichloroacetic and tribromoacetic acids (as described, for example, in Japanese Patent Publication No. 15052/68), the ethylene glycol monoalkyl ether esters, particularly monoethyl ether esters (e.g. those sold under the Trade Mark "CELLOSOLVE") of trichloroacetic acid or tribromoacetic acid [e.g. as described in Japanese Patent Application Kokai (i.e as laid open to public inspection) No. 5288/78] and esters of perchlorocrotonic acid (e.g. as described in Japanese Patent Publication No. 9390/79), since these improve catalyst efficiency considerably.

These catalyst activators, however, when used in copolymerization, provide polymers having a narrower molecular weight distribution than that achieved using the ordinary catalyst systems comprising an organoaluminium compound and a vanadium compound. In addition, these tend to give rise to a decrease in green strength, an increase in creep and an ensuing increase in cold flow. Moreover, the use of these catalyst activators gives rise to serious operational difficulties, such as lowering of the processability of the resulting polymers when mixing, rolling, extruding etc.

It is, therefore, important, when using these catalyst activators, to develop a technique to improve heat resistance, processability and mechanical strength of the resulting copolymers.

Cold flow properties, green strength and roll processability of a polymer are physical properties intimately associated with the molecular weight distribution of the polymer, but it is not possible to control or improve processability simply by controlling the molecular weight distribution.

We have now discovered a way of using catalyst activators of the type described above yet still produce a copolymer having excellent mechanical properties (such as high creep resistance and lower cold flow) and excellent processability.

Accordingly, the present invention consists in a process for producing a copolymer of ethylene and an α-olefin of formula $CH_2=CHR$ (in which R represents a straight or branched chain $C_1—C_6$ alkyl group) or of ethylene, said α-olefin and a linear or cyclic diene or higher polyene having non-conjugated double bonds by polymerization in an inert organic solvent, the polymerization being conducted in the presence of

(a) an organoaluminium compound of formula $R'_nAlX_{(3-n)}$ in which R' represents a $C_1—C_{20}$ hydrocarbon radical, X represents a halogen atom or an alkoxy group and $n$ is a number such that $1 \leqq n \leqq 3$, and

(b) a trivalent to pentavalent vanadium compound soluble in an inert organic solvent,

(c) as catalyst activator, an ester of a halogenated organic acid, and

(d) a molecular weight regulator, in two reactors connected in series while keeping the polymerization temperature in the first of said reactors at from 10 to 60°C, the polymerization temperature in the second of said reactors at from 50 to 100°C, the difference in polymerization temperatures between said first and second reactors at from 5 to 40°C and the ratio of the amounts of copolymer produced in the first to the second reactor at from 3:1 to 1:3.

By carrying out the process of the invention under the preferred conditions described in more detail hereafter, it is possible to produce copolymers, terpolymers and higher copolymers having excellent processability.

The organoaluminium compounds to be used as one of the catalyst components in the process of the present invention are represented by the general formula $R'_nAlX_{(3-n)}$ and include trialkylaluminiums, dialkylaluminium monohalides, alkylaluminium dihalides, alkylaluminium sesquihalides and dialkylaluminium monoalkoxides. Specific examples of such organoaluminium compounds include triethylaluminium, triisopropylaluminium, triisobutylaluminium, trihexylaluminium, diethylaluminium chloride, diethylaluminium bromide, ethylaluminium dichloride, ethylaluminium sesquichloride, diisobutylaluminium chloride, isobutylaluminium sesquichloride and isobutylaluminium dichloride. A single one of these compounds may be used or it is possible to use two or more thereof.

The other catalyst component is a trivalent to pentavalent vanadium compound which is soluble in an inert organic solvent and such compounds include vanadium halides, vanadium oxyhalides, chelate complexes of vanadium with oxygen-containing compounds and vanadic acid esters. Specific examples of

2

such compounds include vanadium tetrachloride, vanadium oxytrichloride, vanadium trisacetylacetonate, vanadium oxytrisacetylacetonate, vanadic acid triethoxide, vanadic acid diethoxychloride, vanadic acid ethoxydichloride, vanadic acid tributoxide, vanadic acid dibutoxychloride and vanadic acid butoxydichloride. A single one of these compounds may be used or it is possible to use two or more of them.

The catalyst activators used in the process of the invention are esters of halogenated organic acids, particularly alkyl trichloroacetates, alkyl tribromoacetates, esters of ethylene glycol monoalkyl (particularly monoethyl) ethers with trichloroacetic acid and alkyl perchlorocrotonates. Specific examples of these compounds include methyl trichloroacetate, ethyl trichloroacetate, methyl tribromoacetate, ethyl tribromoacetate, ethylene glycol monoethyl ether trichloroacetate, ethylene glycol monoethyl ether tribromoacetate, butyl perchlorocrotonate and methyl perchlorocrotonate.

α-Olefins which can be used in the process of the invention are represented by the general formula $CH_2$=CHR and include, for example, propylene, butene-1, pentene-1, hexene-1 and 4-methylpentene-1.

Linear or cyclic non-conjugated dienes or higher polyenes, which are an optional third component of the polymer include, for example, 5-ethylidene-2-norbornene, 5-methylene-2-norbornene, 1,4-hexadiene, 1,6-octadiene, dicyclopentadiene, cyclopentadiene, 5-isopropenyl-2-norbornene and methyl tetrahydroindene. Of these compounds, particularly preferred are 1,4-hexadiene (hereinafter referred to as "1,4-HD"), dicyclopentadiene (hereinafter referred to as "DCPD") and 5-ethylidene-2-norbornene (hereinafter referred to as "ENB").

The inert organic solvent which is used as a reaction solvent in the process of the invention is preferably a hydrocarbon or halogenated hydrocarbon, such compounds being well-known for use in this type of reaction, and examples include hexane, heptane, kerosene, cyclohexane, benzene, chloroform, trichloroethylene, tetrachloroethane and perchloroethylene.

In order to produce copolymers having excellent processability in accordance with the process of the present invention, it is important to establish properly a number of process conditions, specifically: polymerization temperatures in the two reactors (which is, of course, an essential feature of the present invention); amounts of polymers to be formed in the two reactors; and the amount of molecular weight regulator used.

The temperature difference between the first and second stage reactors in the process of the invention can vary over a wide range but, in order to achieve suitable control over the polymerization and production economy, the difference should be within the range from 5°C to 40°C, preferably from 5°C to 30°C. In addition, in order to achieve most favourable results, it is necessary to keep the polymerization temperatures in the first and second stages at from 10°C to 60°C and at from 50°C to 100°C, respectively, preferably from 25°C to 60°C and from 55°C to 80°C, respectively.

It is well-known that this type of polymerization reaction is normally effected in the presence of a molecular weight regulator and likewise the process of the present invention is effected in the presence of such a compound. The molecular weight regulator may be fed either into the first stage reactor only or into both the first and the second stage reactors, but the former is the more effective.

Although it is not yet clear why copolymers having excellent processability are produced by keeping the polymerization temperatures in the first and second stages at different levels and preferably within the respective ranges mentioned above, and although we do not wish to be limited by any theory, it is thought that the copolymers produced in the first and second stages differ in their polymer structure and molecular weight, although the compositions of the copolymers, in terms of amounts and proportions of the monomer components, are the same. When the polymerization temperatures of the first and second stages are kept the same copolymers having the excellent processability of the present invention cannot be obtained and even when the temperatures are outside the preferred ranges, it is difficult to achieve such good copolymers.

Although a polymerization temperature in the first stage higher than 60°C will also give a copolymer having excellent processability, the catalyst efficiency drops considerably at the same time, thus giving rise to the disadvantage of higher catalyst cost.

The ratio of the amount of copolymer produced in the first stage to that produced in the second stage can vary widely within the range of from 3:1 to 1:3, preferably from 2.5:1 to 1:2.5.

Processability of copolymers, in general, can be somewhat improved by producing two copolymers having the same characteristic structural values (i.e. content of α-olefin constituents, iodine value and Mooney viscosity) as the copolymer obtained by the process of this invention at two different polymerization temperatures (for example at 40°C and at 60°C) and blending together the two copolymers. This approach, however, gives rise to additional labour costs for blending and, in addition, is not so effective for improving processability as is the process of the invention.

The catalyst activator (c) may be added in a variety of ways in the process of the invention. For example, it may be added by itself or in admixture with one or more of the catalyst components and it may be added all at once at the beginning of the polymerization process or continuously or discontinuously throughout the polymerization. The amount of catalyst activator to be used may vary over a wide range, but we prefer that it should not exceed an amount equimolar with respect to the organoaluminium compound. Accordingly, the preferred molar ratio of organoaluminium compound to catalyst activator is from 100:1 to 2:1. The preferred molar ratio of catalyst activator to vanadium compound is from 1:0.1 to 1:100, more preferably from 1:1 to 1:30.

3

As already noted, the process of the invention can be carried out in the presence of a molecular weight regulator to produce a copolymer of ethylene and an α-olefin optionally with a polene compound having any particular desired molecular weight. Molecular weight regulators commonly used in this type of process are diethylamine, pyridine-$N$-oxide and hydrogen, of which hydrogen is especially preferred. The amount of molecular weight regulator to be used can easily be chosen based on principles well-known to those skilled in the art, depending upon the desired molecular weight of the copolymer.

The preferred polymerization pressure in the process of this invention is from 1 to 50 bar (kg/cm$^2$), more preferably from 1 to 30 bar (kg/cm$^2$).

The process of the invention enables solution copolymerization to be carried out with ease in a conventional solvent in which the copolymer is soluble to produce a copolymer having an ethylene content as high as 90 mole%.

When the process of the invention is carried out under the preferred conditions described above, it is possible to produce ethylene/α-olefin copolymers and ethylene/α-olefin/polyene terpolymers having low cold flow and high resistance to compression deformation as well as excellent processability during various conventional procedures such as mixing, rolling, extrusion and calendering.

The invention is further illustrated by the following non-limiting Examples.

Example 1

Continuous copolymerization was carried out in two 10 litre SUS autoclaves, each equipped with a stirrer and connected in series. To the bottom of the first-stage reactor were continuously fed: 4.5 kg/hour of hexane, as the polymerization solvent; 0.34 kg/hour of ethylene, 1.36 kg/hour of propylene and 30 g/hour of ENB, as monomers; 0.01 mole% of hydrogen, as molecular weight regulator; and 1.3 g/hour of ethylaluminium sesquichloride (EASC), 0.13 g/hour of vanadium trichloride and 0.65 g/hour of butyl perchlorocrotonate (BPCC). The temperature in this reactor was kept at 50°C.

The resulting polymer solution was then continuously fed to the second-stage reactor, in which polymerization was conducted at 60°C, whilst continuously feeding 2.3 kg/hour of hexane, 0.14 kg/hour of ethylene, 10 g/hour of ENB, 0.8 g/hour of EASC, 0.08 g/hour of vanadium oxytrichloride and 0.4 g/hour of BPCC.

After adding polypropylene glycol of molecular weight about 2,000 as a polymerization stopping agent to the polymerization solution, the resulting copolymer was separated by steam stripping and then dried, giving the copolymer at the rate of 750 g/hour. The copolymer had a propylene content of 43.7 weight%, an iodine value of 8.5 and a Mooney viscosity (ML$_{1+4}$ at 121°C) of 66. The percentage of compression deformation was very low at 5.1% and the processability when mixing and rolling was excellent.

The percentage of compression deformation was determined by measuring the deformation of test pieces after allowing them to stand for 60 minutes at 50°C under a load of 0.19 kg/cm$^2$ using a small heat distortion testing machine (manufactured by Ueshima Seisakujo). The test pieces were pressed sheets having a diameter of 30 mm and a thickness of 10 mm, which were used for the test after being heated at 70°C for 30 minutes.

Examples 2—5 and Comparative Examples 1—5

The polymerization conditions and properties of the resulting copolymers, including processabilities, are summarized in the following Table, in which the following abbreviations are used (in addition to those already explained):

DEAC: Diethylaluminium chloride

TCAM: Methyl trichloroacetate.

Table

| | | | Example No. | | | | Comparative Example No. | | | | |
|---|---|---|---|---|---|---|---|---|---|---|---|
| | | | 2 | 3 | 4 | 5 | 1 | 2 | 3 | 4 | 5 |
| Conditions of 1-st stage polymerization | $C_2H_4/C_3H_6$ charge (Kg/hr) | | 0.35 / 1.60 | 0.46 / 1.40 | 0.41 / 1.43 | 0.35 / 1.60 | 0.35 / 1.60 | 0.46 / 1.40 | 0.41 / 1.43 | 0.41 / 1.43 | 2:1 mixture of polymers of comparative Examples 3 and 4 |
| | Polyene charge (g/hr) | | ENB 41 | ENB 44 | DCPD 42 | ENB 41 | ENB 41 | ENB 44 | DCPD 42 | DCPD 42 | |
| | Polymerization temp (°C) | | 40 | 45 | 50 | 50 | 30 | 50 | 50 | 60 | |
| | Hydrogen charge (mol %) | | 0.03 | 0.07 | 0.10 | 0.03 | 0.10 | 0.07 | 0.1 | 0.07 | |
| | Org. Al compound (g/hr) | | DEAC 0.79 | EASC 0.60 | EASC 2.0 | DEAC 1.4 | EASC 1.0 | EASC 1.6 | DEAC 1.0 | EASC 2.0 | |
| | Catalyst activator (g/hr) | | BPCC 0.40 | BPCC 0.30 | BPCC 0.55 | TCAM 1.0 | BPCC 0.25 | BPCC 0.29 | BPCC 0.50 | BPCC 0.90 | |
| | Vanadium compound (g/hr) | | $VOCl_3$ 0.08 | $VOCl_3$ 0.06 | $VOCl_3$ 0.11 | $VOCl_3$ 0.08 | $VOCl_3$ 0.05 | $VOCl_3$ 0.08 | $VOCl_3$ 0.10 | $VOCl_3$ 0.19 | |

0 059 034

0 059 034

Table (Cont'd)

| Conditions of 2-nd stage polymerization | | 0.14/0 | 0.17/0 | 0.15/0 | 0.15/0 | 0.14/0 | 0.17/0 | | | |
|---|---|---|---|---|---|---|---|---|---|---|
| | $C_2H_4/C_3H_6$ charge (Kg/hr) | 0.14/0 | 0.17/0 | 0.15/0 | 0.15/0 | 0.14/0 | 0.17/0 | | | |
| | Polyene charge (g/hr) | ENB 12 | ENB 13 | DCPD 15 | ENB 12 | ENB 12 | ENB 13 | | | |
| | Polymerization temp. (°C) | 60 | 67 | 61 | 60 | 48 | 50 | | | |
| | Hydrogen charge (mol %) | 0 | 0 | 0 | 0 | 0 | 0 | | | |
| | Org. Al compound (g/hr) | DEAC 1.10 | EASC 1.00 | EASC 1.80 | DEAC 2.00 | EASC 0.50 | DEAC 0.40 | | | |
| | Catalyst activator (g/hr) | BPCC 0.50 | BPCC 0.50 | BPCC 0.40 | TCAM 1.00 | BPCC 0.25 | BPCC 0.13 | | | |
| | Vanadium compound (g/hr) | VOCl$_3$ 0.11 | VOCl$_3$ 0.10 | VOCl$_3$ 0.09 | VOCl$_3$ 0.11 | VOCl$_3$ 0.05 | VOCl$_3$ 0.04 | | | |
| 1-st stage/2nd stage amount ratio of polymer formed | | 1.8 | 2.3 | 2.0 | 1.8 | 2.2 | 2.0 | - | - | (2.0) |

| | | | | | | | | | | |
|---|---|---|---|---|---|---|---|---|---|---|
| Structural value | 1-st stage polymer Mooney viscosity, 121°C | 83 | 62 | 100°C 58 | 72 | 78 | 62 | – | – | – |
| | 2-nd stage polymer * Mooney viscosity, 121°C | 33 | 75 | 100°C 52 | 58 | 36 | 71 | – | – | – |
| | Final Mooney viscosity | 121°C 65 | 121°C 66 | 100°C 56 | 121°C 67 | 121°C 65 | 121°C 65 | 100°C 58 | 100°C 56 | 100°C 57 |
| | Propylene content (wt %) | 43.6 | 31.1 | 35.2 | 44.7 | 44.1 | 30.7 | 35.6 | 34.8 | 35.2 |
| | Iodine value | 9.6 | 10.4 | 7.4 | 9.1 | 9.8 | 9.7 | 7.1 | 7.3 | 7.2 |
| Compression deformation % | | 6.8 | 5.3 | 7.0 | 8.3 | 19.3 | 19.6 | 17.0 | 14.3 | 15.7 |
| Processability | Rolling | o | o | ·o | o ~ Δ | Δ~× | Δ | Δ~ × | Δ | Δ |
| | Mixing | o | o | o | o | × | × | × | Δ | Δ |
| | Extrusion | Δ | – | o | Δ | × | – | × | Δ | Δ |
| | Calendering | – | – | o | – | – | – | × | Δ | Δ |

\* Mooney viscosity of the 2-nd stage polymer was calculated from Mooney viscosities of the 1-st polymer and of the finally obtained polymer and the 1-st stage/2-nd stage amount ratio of polymer formed.

0 059 034

The properties and processabilities of the copolymers produced were evaluated in the following ways:

Measurement of percentage compression deformation

This was done as described in Example 1. The copolymers obtained in Examples 1—5 all have low percentages of compression deformation (in other words low cold flow) as compared with the copolymers obtained in Comparative Examples 1—5, thus indicating that the resistance to compression deformation is much improved by the process of this invention.

Mixing processability

The mixing processability of each copolymer was evaluated by measuring the folding endurance of a compound containing the polymer prepared by mixing in a BR-type Banbury mixer, followed by vulcanization under the following conditions. The measured folding endurance was regarded as a measure of the uniformity of dispersion of the carbon black, which depends upon the mixing processability of the copolymer.

Mixing conditions:

| | |
|---|---|
| Percentage of volume of mixer filled with compound | 75%, front rotor 57.5/back rotor 51.2 r.p.m. |
| Mixing temperature | 70°C at start, 150°C at maximum |
| Mixing time | 5 minutes, charged at a time |

Compounding formulation:

| | |
|---|---|
| EPDM | 100 parts by weight |
| Carbon black (Seast 3) | 60 parts by weight |
| Process oil (Sonic R—1000) | 10 parts by weight |
| ZnO | 5 parts by weight |
| Stearic acid | 1 part by weight |
| Vulcanization accelerator Sokushinol TS Sokushinol M } mixed by roll milling | 1 part by weight 0.25 part by weight |
| Sulphur | 1 part by weight |

"Seast", "Sonic" and "Sokushinol" are Trade Marks.

Vulcanization:

| | |
|---|---|
| Temperature: | 160°C |
| Period: | Controlled so that the modulus values of test pieces might become identical. |

Measurement:

Measured at 30°C in accordance with JIS K—6301.

"JIS" means "Japanese Industrial Standard".

Comparison was made between the copolymer of Example 3 and that of Comparative Example 2 and between the copolymers of Examples 4 and 5 and those of Comparative Examples 3, 4 and 5.

The folding endurance values for Example 3 and for Comparative Example 2 were 670 and 420 folds respectively. Those for Example 4 and Comparative Examples 3, 4 and 5 were 2550, 1500, 1700 and 1550 folds, respectively. Those for Examples 2 and 5 and for Comparative Examples 1 and 2 were 680, 660, 530 and 570 folds, respectively.

From this it can be seen that the copolymers produced by the process of the invention have superior folding endurance. Since the better the dispersion of fillers (such as carbon black), the higher is the folding endurance, the copolymers produced by the process of the invention have excellent mixing processability.

Rolling processability

The rolling processability of each copolymer was evaluated using a 8 inch (20.32 cm) two-roll mixing mill and observing the behaviour of sample stock as it wound round the rolls at a roll surface temperature of 50°C and with a gap of 2 mm between the rolls. The results are shown in the foregoing Table, in which the symbols employed for this evaluation are as follows:

O:  No bagging of the stock was observed and the stock wound round the front roll;

Δ:  a little bagging was observed;

X:  severe bagging was observed and the stock wound around the back roll.

The same compounding formulation was used as in the evaluation of mixing processability.

Extrusion processability

This was evaluated by mixing each sample compound in a BR-type Banbury mixer, extruding the resulting compounds through a 45 mm diameter extruder and an ASTM Garvey dice, and then observing the surface appearance of the extrudates. The compounding formulation was the same as that used in the evaluation of mixing processability and the results are reported in the foregoing Table using the following symbols:

O:  The extrudate had a smooth surface;

Δ:  the extrudate had a slightly coarse surface;

X:  the extrudate had a markedly coarse surface.

A comparison between the copolymers of Examples 1 and 2 and that of Comparative Example 2 showed that the surface of the extrudate of Comparative Example 2 was extremely coarse and that, whilst the extrudates of Examples 1 and 2 had somewhat coarse surfaces, these were much better than that of Comparative Example 2.

Calendering processability

This evaluation was effected by mixing each sample compound in a BR-type Banbury mixer (front rotor 57.5/back rotor 51.2 r.p.m. × 4 minutes), calendering the resulting compound through a four-roll 8 inch (20.32 cm) calender (the surface temperatures of the rolls were 98°C, 95°C, 90°C and 85°C) at a speed of 7 metres/minute and observing the appearance of the resulting sheets. The results are reported in the foregoing Table using the following codes:

O:  The sheet had occluded no bubbles and had a smooth surface;

Δ:  the sheet had occluded a small number of bubbles and had a slightly coarse surface;

X:  the sheet had occluded many bubbles and had a coarse surface.

The compounding formulation used was (parts by weight):

| | |
|---|---|
| EPDM | 100 |
| Carbon black HAF | 70 |
| Inorganic filler | 35 |
| Softening agent | 35 |
| Processing aid | 14 |
| Stearic acid | 2.5 |
| ZnO | 5 |

Accelerating agents

| | |
|---|---|
| Sokushinol BZ | 1.5 |
| Sokushinol TT | 0.5 |
| Sokushinol M | 0.5 |
| Sokushinol CZ | 1.0 |
| Sulphur | 1.2 |

Comparing the copolymer of Example 4 with those of Comparative Examples 3 and 4, the calendered sheet of Example 4 had occluded no bubbles and had a smooth surface, whereas that of Comparative Example 3 had occluded a large number of bubbles and had a coarse surface whilst that of Comparative Example 4 had occluded a small number of bubbles and had a slightly coarse surface, thus indicating the superiority of the copolymer of Example 4 in calendering processability.

**Claims**

1. A process for producing a copolymer of ethylene and an α-olefin of formula $CH_2=CHR$ (in which R represents a straight or branched chain $C_1$—$C_6$ alkyl group) or of ethylene, said α-olefin and a linear or cyclic diene or higher polyene having non-conjugated double bonds by polymerization in an inert organic solvent, the polymerization being conducted in the presence of

(a) an organoaluminium compound of formula $R'_nAlX_{(3-n)}$ (in which $R'$ represents a $C_1$—$C_{20}$ hydrocarbon radical, X represents a halogen atom or an alkoxy group and $n$ is a number such that $1 \leqq n \leqq 3$),

(b) a trivalent to pentavalent vanadium compound soluble in an inert organic solvent,

(c) as a catalyst activator, an ester of a halogenated organic acid, and

(d) a molecular weight regulator, in two reactors connected in series while keeping the polymerization temperature in the first of said reactors at from 10 to 60°C, the polymerization temperature in the second of said reactors at from 50 to 100°C, the difference in polymerization temperatures between said first and second reactors at from 5 to 40°C and the ratio of the amounts of copolymer produced in the first to the second reactor at from 3:1 to 1:3.

2. A process according to Claim 1, in which said organoaluminium compound is one or more of diethylaluminium chloride, ethylaluminium dichloride, diisobutylaluminium chloride, isobutylaluminium dichloride, ethylaluminium sesquichloride, isobutylaluminium sesquichloride and trihexylaluminium.

3. A process according to Claim 1 or Claim 2, in which said vanadium compound is one or more of vanadium tetrachloride, vanadium oxytrichloride, vanadium trisacetylacetonate, vanadic acid triethoxide, vanadic acid diethoxymonochloride, vanadic acid ethoxydichloride, vanadic acid tributoxide, vanadic acid dibutoxymonochloride and vanadic acid butoxydichloride.

4. A process according to any one of the preceding Claims, in which said catalyst activator is one or more of methyl trichloroacetate, ethyl trichloroacetate, methyl tribromoacetate, ethyl tribromoacetate, butyl perchlorocrotonate, ethyl perchlorocrotonate, methyl perchlorocrotonate, an ester of trichloroacetic acid with an ethylene glycol monoalkyl ether and an ester of tribromoacetic acid with an ethylene glycol monoalkyl ether.

5. A process according to any one of the preceding Claims, in which said α-olefin is one or more of propylene, butene-1, pentene-1, hexene-1 and 4-methylpentene-1.

6. A process according to any one of the preceding Claims, in which said non-conjugated diene is one or more of 1,4-hexadiene, dicyclopentadiene and 5-ethylidene-2-norbornene.

7. A process according to any one of the preceding Claims, in which the polymerization temperature in the first stage is from 25°C to 60°C, the polymerization temperature in the second stage is from 55°C to 80°C and the difference between the polymerization temperatures in the first and second stages is from 5°C to 30°C.

8. A process according to any one of the preceding Claims, in which the molar ratio of said organoaluminium compound (a) to said catalyst activator (c) is from 100:1 to 2:1 and the molar ratio of said catalyst activator (c) to said vanadium compound (b) is from 0.1:1 to 100:1.

9. A process according to any one of the preceding Claims, in which said inert organic solvent is hexane, heptane, kerosene, cyclohexane, benzene, chloroform, trichloroethylene, perchloroethane or perchloroethylene.

10. A process according to any one of the preceding Claims, in which the ratio of the amount of copolymer produced in the first stage of polymerization to that produced in the second stage is from 2.5:1 to 1:2.5.

**Patentansprüche**

1. Verfahren zur Herstellung eines Copolymerisats von Äthylen mit einem α-Olefin der Formel $CH_2=CHR$ (in der R einen unverzweigten oder verzweigten $C_1$—$C_6$-Alkylrest bedeutet) oder von Äthylen mit

dem α-Olefin und einem linearen oder cyclischen Dien oder einem höheren Polyen mit nicht-konjugierten Doppelbindungen durch Polymerisation in einem inerten organischen Lösungsmittel, wobei die Polymerisation durchgeführt wird in Gegenwart von

(a) einer Organoaluminiumverbindung der Formel $R'_nAlX_{(3-n)}$ (in der R' einen $C_1$—$C_{20}$-Kohlenwasserstoffrest, X ein Halogenatom oder einen Alkoxyrest darstellt und $n$ eine Zahl ist, die folgende Gleichung erfüllt: $1 \leqq n \leqq 3$),

(b) einer in einem inerten organischen Lösungsmittel löslichen dreiwertigen bis fünfwertigen Vanadiumverbindung,

(c) einem Ester einer halogenierten organischen Säure als Katalysator-Aktivator und

(d) einem Molekulargewichtsregler, in zwei in Reihe geschalteten Reaktoren, wobei die Polymerisationstemperatur in dem ersten Reaktor bei 10 bis 60°C und im zweiten Reaktor bei 50 bis 100°C gehalten wird, der Unterschied der Polymerisationstemperaturen zwischen dem ersten und zweiten Reaktor 5 bis 40°C beträgt und das Mengenverhältnis des im ersten und zweiten Reaktor erzeugten Copolymerisats 3:1 bis 1:3 beträgt.

2. Verfahren nach Anspruch 1, wobei die Organoaluminiumverbindung eine oder mehrere von Diäthylaluminiumchlorid, Äthylaluminiumdichlorid, Diisobutylaluminiumchlorid, Isobutylaluminiumdichlorid, Äthylaluminiumsesquichlorid, Isobutylaluminiumsesquichlorid und Trihexylaluminium ist.

3. Verfahren nach Anspruch 1 oder 2, wobei die Vanadiumverbindung eine oder mehrere von Vanadiumtetrachlorid, Vanadiumoxytrichlorid, Vanadiumtris-acetylacetonat, Vanadinsäuretriäthoxid, Vanadinsäurediäthoxymonochlorid, Vanadinsäureäthoxydichlorid, Vanadinsäuretributoxid, Vanadinsäuredibutoxymonochlorid und Vanadinsäurebutoxydichlorid ist.

4. Verfahren nach einem der vorhergehenden Ansprüche, wobei der Katalysator-Aktivator einer oder mehrere von Trichloressigsäuremethylester, Trichloressigsäureäthylester, Tribromessigsäuremethylester, Tribromessigsäureäthylester, Perchlorcrotonsäurebutylester, Perchlorcrotonsäureäthylester, Perchlorcrotonsäuremethylester, ein Ester der Trichloressigsäure mit einem Äthylenglykolmonoalkyläther und ein Ester der Tribromessigsäure mit einem Äthylenglykolmonoalkyläther ist.

5. Verfahren nach einem der vorhergehenden Ansprüche, wobei das α-Olefin eines oder mehrere von Propylen, Buten-1, Penten-1, Hexen-1 und 4-Methylpenten-1 ist.

6. Verfahren nach einem der vorhergehenden Ansprüche, wobei das nicht-konjugierte Dien eines oder mehrere von 1,4-Hexadien, Dicyclopentadien und 5-Äthyliden-2-norbornen ist.

7. Verfahren nach einem der vorhergehenden Ansprüche, wobei die Polymerisationstemperatur in der ersten Stufe 25 bis 60°C und die Polymerisationstemperatur in der zweiten Stufe 55 bis 80°C beträgt und der Unterschied zwischen den Polymerisationstemperaturen in der ersten und zweiten Stufe 5 bis 30°C beträgt.

8. Verfahren nach einem der vorhergehenden Ansprüche, wobei das Molverhältnis der Organoaluminiumverbindung (a) zum Katalysator-Aktivator (c) 100:1 bis 2:1 und das Molverhältnis des Katalysator-Aktivators (c) zur Vanadiumverbindung (b) 0,1:1 bis 100:1 beträgt.

9. Verfahren nach einem der vorhergehenden Ansprüche, wobei das inerte organische Lösungsmittel Hexan, Heptan, Kerosin, Cyclohexan, Benzol, Chloroform, Trichloräthylen, Perchloräthan oder Perchloräthylen ist.

10. Verfahren nach einem der vorhergehenden Ansprüche, wobei das Mengenverhältnis des in der ersten Stufe der Polymerisation erzeugten Copolymerisats zu dem in der zweiten Stufe erzeugten Copolymerisat 2,5:1 bis 1:2,5 beträgt.

## Revendications

1. Procédé de production d'un copolymère d'éthylène et d'une α-oléfine de formule $CH_2=CHR$ (dans laquelle R représente un groupement alkyle en $C_1$—$C_6$ à chaîne droite ou ramifiée) ou d'éthylène, de ladite α-oléfine et d'un diène linéaire ou cyclique ou polyène supérieur ayant des doubles liaisons non conjugées, par polymérisation dans un solvant organique inerte, la polymérisation étant conduite en présence de

a) un composé organoaluminique de formule $R'_nAlX_{(3-n)}$ (dans laquelle R' représente un radical hydrocarboné en $C_1$—$C_{20}$, X représente un atome d'halogène ou un groupe alcoxy et $n$ est un nombre tel que $1 \leqq n \leqq 3$,

b) un composé de vanadium trivalent à pentavalent soluble dans un solvant organique inerte,

c) en tant qu'activateur du catalyseur, un ester d'un acide organique halogéné, et

d) un régulateur de poids moléculaire, dans deux réacteurs reliés en série, tout en maintenant la température de polymérisation dans le premier desdits réacteurs à une valeur de 10 à 60°C, la température de polymérisation dans le second desdits réacteurs à une valeur de 50 à 100°C, la différence des températures de polymérisation entre le premier et le second réacteur à une valeur de 5 à 40°C et le rapport de la quantité de copolymère produit dans le premier réacteur à celle produite dans le second réacteur à une valeur de 3:1 à 1:3.

2. Procédé selon la revendication 1, dans lequel ledit composé organoaluminique est un ou plusieurs des composés suivants: chlorure de diéthylaluminium, dichlorure d'éthylaluminium, chlorure de diisobutylaluminium, dichlorure d'isobutylaluminium, sesquichlorure d'éthylaluminium, sesquichlorure d'isobutylaluminium et trihexylaluminium.

3. Procédé selon l'une ou l'autre des revendications 1 ou 2, dans lequel ledit composé du vanadium est un ou plusieurs des composés suivants: tétrachlorure de vanadium, oxytrichlorure de vanadium, trisacétyl-acétonate de vanadium, triéthylate d'acide vanadique, diéthoxymonochlorure d'acide vanadique, éthoxy-dichlorure d'acide vanadique, tributylate d'acide vanadique, dibutoxymonochlorure d'acide vanadique et butoxydichlorure d'acide vanadique.

4. Procédé selon l'une quelconque des revendications précédentes, dans lequel ledit activateur de catalyseur est un ou plusieurs des composés suivants: trichloroacétate de méthyle, trichloroacétate d'éthyle, tribromoacétate de méthyle, tribromoacétate d'éthyle, perchlorocrotonate de butyle, perchlorocrotonate d'éthyle, perchlorocrotonate de méthyle, un ester de l'acide trichloroacétique et d'un éther monoalkylique de l'éthylèneglycol et un ester de l'acide tribromoacétique et d'un éther monoalkylique de l'éthylèneglycol.

5. Procédé selon l'une quelconque des revendications précédentes, dans lequel ladite α-oléfine est un ou plusieurs des composés suivants: propylène, butène-1, pentène-1, hexène-1 et 4-méthylpentène-1.

6. Procédé selon l'une quelconque des revendications précédentes, dans lequel ledit diène non conjugué est un ou plusieurs des composés suivants: 1,4-hexadiène, dicyclopentadiène et 5-éthylidène-2-norbornène.

7. Procédé selon l'une quelconque des revendications précédentes, dans lequel la température de polymérisation dans le premier stade est de 25° à 60°C, la température de polymérisation dans le second stade est de 55° à 80°C et la différence entre les températures de polymérisation dans le premier et le second stades est de 5° à 30°C.

8. Procédé selon l'une quelconque des revendications précédentes, dans lequel le rapport molaire dudit composé organoaluminique (a) audit activateur de catalyseur (c) est de 100:1 à 2:1 et le rapport molaire dudit activateur de catalyseur (c) audit composé de vanadium (b) est de 0,1:1 à 100:1.

9. Procédé selon l'une quelconque des revendications précédentes, dans lequel ledit solvant organique inerte est l'hexane, l'heptane, le cyclohexane, le benzène, le chloroforme, le trichloroéthylène, le perchloro-éthane ou le perchloroéthylène.

10. Procédé selon l'une quelconque des revendications précédentes, dans lequel le rapport de la quantité de copolymère produite dans le premier stade de la polymérisation à celle produite dans le second stade est de 2,5:1 à 1:2,5.